(19) **Europäisches Patentamt**

**European Patent Office**

**Office européen des brevets**

(11) **EP 1 174 663 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(51) Int Cl.:
*F24F 11/00* (2006.01)   *F24F 13/04* (2006.01)
*B60H 1/00* (2006.01)

(21) Anmeldenummer: **01113482.2**

(22) Anmeldetag: **02.06.2001**

(54) **Verfahren zur Belüftungsregelung**

Ventilation control method

Procédé de régulation de ventilation

(84) Benannte Vertragsstaaten:
**DE ES FR GB IT SE**

(30) Priorität: **21.07.2000 DE 10035510**

(43) Veröffentlichungstag der Anmeldung:
**23.01.2002 Patentblatt 2002/04**

(73) Patentinhaber: **Bayerische Motoren Werke Aktiengesellschaft**
**80809 München (DE)**

(72) Erfinder: **Herpel, Thomas, Dr.**
**85737 Ismaning (DE)**

(56) Entgegenhaltungen:
| | |
|---|---|
| **DE-A- 2 927 697** | **US-A- 3 934 642** |
| **US-A- 4 577 800** | **US-A- 4 677 902** |
| **US-A- 5 267 896** | **US-A- 5 983 659** |

EP 1 174 663 B1

**1** EP 1 174 663 B1 **2**

## Beschreibung

Die Erfindung betrifft ein Verfahren zur Belüftungsregelung gemäß dem Oberbegriff des Anspruchs 1. Ein solches Verfahren ist durch dokument US 5, 267, 896 schon bekannt.

Bei der Belüftung, Heizung oder Kühlung in Kraftfahrzeugen wird eine im FahrzeugInnenraum einzustellende Innentemperatur herkömmlicherweise durch Mischung von Warm- und Kaltluft erreicht. Die Warmluft wird durch Verwendung eines Wärmetauschers erzeugt und in einem Warmluftkanal geführt. Der Warmluftkanal vereinigt sich meist mit einem Kaltluftkanal zu einem Gesamtkanal. Die Kaltluft wird entweder von der Umgebungsluft oder einem Kühlelement geliefert. Durch Einstellung der jeweiligen Luftmassen aus den Warmluft- und Kaltluftkanälen kann eine gewünschte Mischtemperatur erreicht werden.

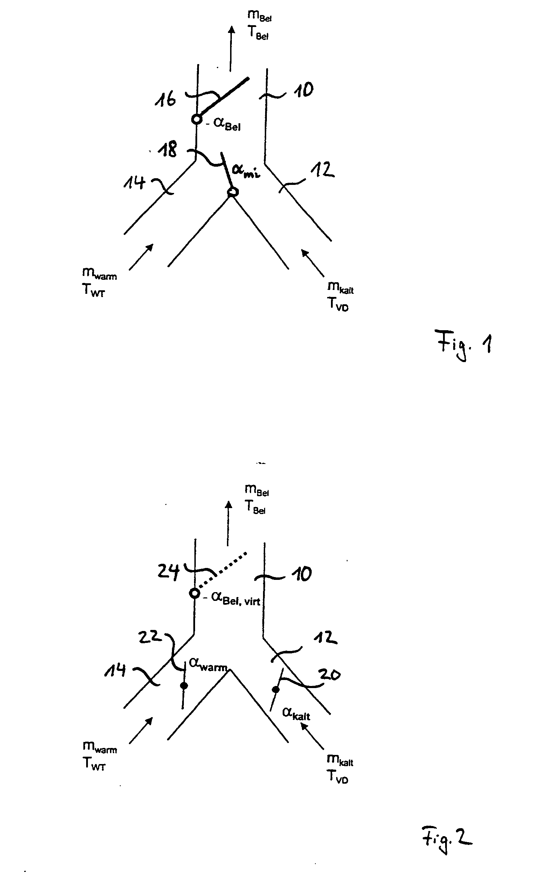

Um sowohl die Mischtemperatur wie auch die Gesamtluftmasse regeln zu können, sind bisher oftmals zwei Klappen in den einzelnen Kanälen vorgesehen, wie dies in Fig. 1 dargestellt ist. In Fig. 1 ist mit der Bezugsziffer 12 einKaltluftkanal bezeichnet, in dem ein Luftmassenstrom $m_{kalt}$ mit einer Temperatur $T_{VD}$ strömt. In einem Warmluftkanal 14 ist ein Luftmassenstrom $m_{warm}$ mit einer Lufttemperatur $T_{WT}$ zu finden. Beide Kanäle 12 und 14 vereinigen sich zu einem Gesamtluftkanal 10, in dem sich eine Mischtemperatur $T_{Bel}$ und ein Gesamtluftmassenstrom $m_{Bel}$ einstellen.

Gemäß dem Stand der Technik, und in diesem Zusammenhang wird auf die US 5,267,896 sowie 5,042,556 hingewiesen, ergibt sich die Mischtemperatur $T_{Bel}$ im wesentlichen aus der Stellung einer Misch-Lüftungsklappe 18, welche durch entsprechende Positionierung das Verhältnis der Luftmassenströme $m_{kalt}$ sowie $m_{warm}$ bestimmt. Der Gesamtluftmassenstrom $m_{Bel}$ wird dagegen von einer eigenen Klappe 16, welche im Gesamtlüftungskanal 10 angeordnet ist, definiert.

Die jeweiligen Positionen ($\alpha_{mi}$, $\alpha_{Bel}$) der Lüftungsklappen 16 und 18 werden aufgrund von Steuergrößen eingestellt, die an nicht dargestellten Aktoren, welche jeweils mit den entsprechenden Klappen verbunden sind, anliegen. Die Steuergrößen ergeben sich aus Belüftungsmodellen, die herkömmlich bekannt sind.

Andererseits ist es auch denkbar, anstelle der in Fig. 1 dargestellten Klappen zwei separate Klappen jeweils in den Warm- und Kaltluftkanälen selbst anzuordnen. Dann jedoch könnten dazu nicht mehr die bisherigen Steuergrößen verwendet werden.

Aufgabe der vorliegenden Erfindung ist es, ein Verfahren zu schaffen, mit dem die bisherigen Steuergrößen aus den bekannten Belüftungs- und Klimatisierungsmodellen, welche zum Teil besonders ausgeklügelt sind, auch weiterhin verwendet werden können.

Diese Aufgabe wird durch die im Anspruch 1 genannten Merkmale gelöst.

Um das herkömmliche Modell anwenden zu können, wird eine virtuelle Klappe für den Gesamtkanal eingeführt, welche der bisherigen Gesamtluftstrom-Klappe entspricht und damit, beaufschlagt mit der herkömmlichen Steuergröße bei deren Realisierung, einen gewünschten Gesamtmassenstrom $m_{Bel}$ realisieren würde. Die Stellung der virtuellen Klappe wird dann in Stellungen für die nunmehr verwendeten Klappen in den Warm- und Kaltluftkanälen selbst umgerechnet. Damit ergibt sich eine Konvertierung, welche eine Anpassung der herkömmlichen Modelle auf die neue Belüftungsvorrichtung ermöglicht.

Das erfindungsgemäße Verfahren kann insbesondere als Steuerung ausgebildet sein.

Natürlich kann nicht nur der Gesamtluftstrom über die Kombination der Einstellung der verschiedenen Klappen in den einzelnen Kanälen, sondern auch die Mischtemperatur selbst eingestellt werden. Gemäß einer besonderen Ausführungsform wird dabei der Öffnungsgrad der virtuellen Klappe einerseits und die Summe aus den Öffnungsgraden der Warmluftkanal-Klappe und der Kaltluftkanal-Klappe andererseits als proportional voneinander abhängig angesehen. In ähnlicher Weise kann auch die Mischtemperatur einerseits und die Summe aus den Produkten von Warmluftkanal-Temperatur und Warmluftkanal-Öffnungsgrad sowie Kaltluftkanal-Temperatur und Kaltluftkanal-Öffnungsgrad andererseits als proportional voneinander abhängig angenommen werden. Mit diesen beiden Beziehungen lassen sich auf einfache Weise simple Konvertierungsschritte darstellen.

Ein Ausführungsbeispiel der vorliegenden Erfindung wird nachfolgend und mit Bezug auf die beiliegenden Zeichnungen näher beschrieben. Die Zeichnungen zeigen in

Fig. 1     eine schematische Darstellung einer Lüftungskanalanordnung gemäß dem Stand der Technik,

Fig. 2     eine Anordnung einer Lüftungskanaldarstellung, wie sie bei der vorliegenden Erfindung verwendet wird und

Fig. 3     ein schematisches Blockschaltbild, welche den bisherigen und den neuen Teil beim Ausführungsbeispiel für die vorliegende Erfindung näher beschreibt.

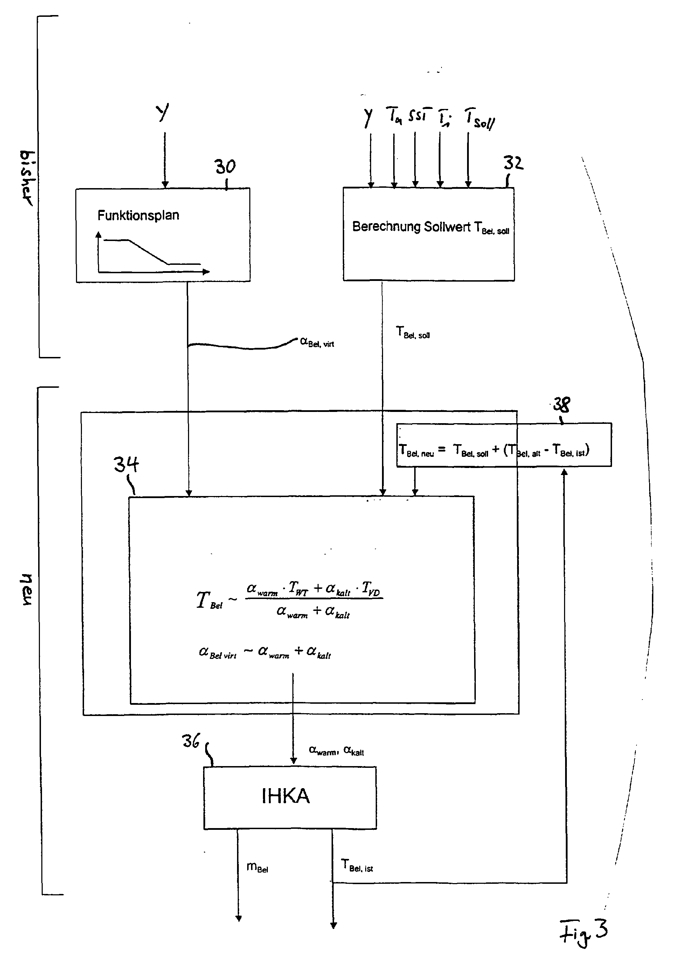

In Fig. 2 ist eine Belüftungsvorrichtung dargestellt, wie sie für die vorliegende Erfindung verwendet wird. Dabei bezeichnen gleiche Bezugszeichen gleiche oder ähnliche Teile. Beim Ausführungsbeispiel vereinigen sich ein Kaltluftkanal 12 sowie ein Warmluftkanal 14 zu einem Gesamtkanal 10. Der Strömungsquerschnitt des Kaltluftkanals 12 kann durch eine Lüftungsklappe 20, der Strömungsquerschnitt des Warmluftkanals 14 durch eine Lüftungsklappe 22 verstellt werden. Damit können die jeweiligen Luftmassenströme $m_{kalt}$ und $m_{warm}$ in gewünschter Weise gesteuert werden. Über die eingestellten Strömungsquerschnitte und damit die ge-

2

wählten Luftmassenströme $m_{kalt}$ sowie $m_{warm}$ sowie die zugehörigen Lufttemperaturen in den jeweiligen Kanälen, nämlich $T_{VD}$ und $T_{WT}$ ergibt sich dann eine Mischtemperatur $T_{Bel}$ sowie ein Gesamtluftmassenstrom $m_{Bel}$ im Gesamtkanal 10.

Gemäß der vorliegenden Erfindung wird nunmehr im Gesamtkanal eine virtuelle Klappe 24 eingeführt, die nur rein modellhaft und nicht real vorhanden ist. Ferner werden weiter bisherige Temperaturmodelle und entsprechende Steuergrößen verwendet, wie sie bei einer Belüftungsvorrichtung gemäß Fig. 1 zum Zuge kommen. Eine entsprechende Steuergröße Y würde bei Fig. 1 auch die Stellung der Klappe 16 für die Gesamtströmungsmasse $m_{Bel}$ ergeben. Die entsprechende Steuergröße Y wird nun verwendet, um daraus einen virtuellen Öffnungswinkel $\alpha_{Bel, virt}$ für die virtuelle Klappe 24 zu bestimmen.

Diese Vorgehensweise ist aus Fig. 3 ersichtlich. Dabei stellt der obere Teil das bisherige Verfahren dar, gemäß dem über eine Stellgröße Y und eine entsprechende Kennlinie aus Tabelle 30 ein Öffnungsgrad $\alpha_{Bel}$ für die Lüftungsklappe 16 im Gesamtkanal 10 berechnet worden ist. In der Einheit 32 werden aus der Stellgröße Y der Aussentemperatur $T_a$, dem Schichtungsstellersignal SST, dem Temperatursollwert $T_{soll}$ und der Innenraumtemperatur T; ein Sollwert für die Belüftungstemperatur (Mischtemperatur) $T_{Bel, soll}$ bestimmt. Diese Werte wurden bei einer Belüftungsvorrichtung gemäß Fig. 1 an den entsprechenden Stellmotor für die Klappe 18 abgegeben, so dass eine korrespondierende Einstellung vorgenommen worden ist.

Nunmehr werden diese Werte gemäß dem Ausführungsbeispiel einer weiteren Einheit zugeführt, die zum einen ein Konvertierungsprogramm und zum anderen eine Iterationssstufe darstellt (Abschnitt: neu").

In der Iterationsstufe 34 werden aus den beiden Gleichungen

$$T_{Bel} \approx \frac{\alpha_{warm} \cdot T_{WT} + \alpha_{kalt} \cdot T_{VD}}{\alpha_{warm} + \alpha_{kalt}}$$

und

$$\alpha_{Belvir} \approx \alpha_{warm} + \alpha_{kalt}$$

zwei Unbekannte, nämlich der Öffnungsgrad für die Klappe im Warmluftkanal $\alpha_{warm}$ und der Öffnungsgrad für die Klappe im Kaltluftkanal $\alpha_{kalt}$ berechnet. Diese Größen werden als $\alpha_{warm}$ und $\alpha_{kalt}$ an die integrierte Heiz- und Klimaautomatik 36 (IHKA) weitergegeben, die daraufhin über die entsprechenden, nicht dargestellten Aktoren die zugeordneten Klappen 20 und 22 einstellt. Damit ergeben sich ein Luftmassenstrom $m_{Bel}$ sowie eine Mischtemperatur $T_{Bel, ist}$, welche die Klimatisierung im Fahrzeuginnenraum bestimmen. Die Ist-Temperatur $T_{Bel, ist}$ wird nunmehr zurückgemeldet, wobei in einer separaten Einheit 38 nunmehr eine neue Belüftungstemperatur aus der Abweichung der Ist-Temperatur $T_{Bel, ist}$ von der alten Mischtemperatur $T_{Bel, alt}$ bestimmt wird. Diese Differenz wird in Summe mit dem Sollwert $T_{Bel,soll}$ für die Mischtemperatur $T_{Bel, neu}$ nun in die Iterationsstufe 34 zurückgemeldet, so dass sich über verschiedene Iterationsstufen die gewünschten Größen für die Gesamtluftstrommasse $m_{Bel}$ und $T_{Bel, ist}$ ergeben.

Insgesamt ist mit dem in Fig. 3 dargestellten neuen Schritt eine Konvertierungsstufe von einem alten Klimamodell zu einer Belüftungsvorrichtung, wie sie in Fig. 2 dargestellt ist, gegeben. Damit brauchen die zum Teil komplexen herkömmlichen Klimamodelle, welche auf Vorrichtungen, wie sie in Fig. 1 angegeben sind, bezogen wurden, nicht völlig neu erarbeitet zu werden.

Lässt man in Fig. 3 die Rückkopplung über die Iterationsstufe weg, so erhält man eine einfach Steuerung.

## Patentansprüche

1. Verfahren zur Belüftungsregelung, bei dem eine Luftmischtemperatur $T_{Bel}$ sowie ein Luftmassenstrom $m_{Bel}$ in einem Gesamtkanal durch die Einstellung von in einem Warmluftkanal (14) angeordneter realer Klappe (22) und in einem Kaltluftkanal (12) angeordneter realer Klappel (20), wobei Warm- und Kaltluftkanal sich stromabwärts der Klappen zum Gesamtkanal vereinigen, wählbar sind und bei dem die Klappenstellungen aufgrund von Steuergrößen eingestellt werden,
**dadurch gekennzeichnet,**
**dass** eine virtuelle Klappe (24) im Gesamtkanal (10) definiert wird, bei deren Verwirklichung durch deren Einstellung der Luftmassenstrom $m_{Bel}$ bestimmt sein würde,
**dass** Steuergrößen für die Stellung der virtuellen Klappe (24) verwendet werden, die - bei Realisierung der virtuellen Klappe (24) - einen bestimmten Luftmassenstrom $m_{Bel}$ ergeben würden und
**dass** die Stellungen der Kaltluftkanal-Klappe (20) sowie der WarmluftkanalKlappe (22) in Abhängigkeit von den Steuergrößen für die virtuelle Klappe mittels eine Konvertierungsprogrammes bestimmt werden, derart, dass der durch die virtuelle Klappe (24) zu erzeugende Luftmassenstrom $m_{Bel}$ durch die Einstellung der realen Klappen (20, 22) realisierbar ist.

2. Verfahren nach Anspruch 1,
**dadurch gekennzeichnet,**
**dass** bei der Umrechnung der Klappenstellung der virtuellen Klappe (24) in die Stellungen der Klappen des Warm- und Kaltluftkanals die Lufttemperaturen im Warmluftkanal $T_{WT}$ sowie im Kaltluftkanal $T_{VD}$ berücksichtigt werden.

**3.** Verfahren nach Anspruch 1 oder 2, **dadurch gekennzeichnet, dass** die gewünschte Mischtemperatur $T_{Bel}$ durch eine entsprechende Einstellung der Kaltluftkanal-Klappe (20) sowie der Warmluftkanalklappe (22) erreicht wird.

**4.** Verfahren nach einem der Ansprüche 1 bis 3, **dadurch gekennzeichnet, dass** der Öffnungsgrad der virtuellen Klappe (24) einerseits und die Summe aus den Öffnungsgraden der Warmluftkanal-Klappe (22) und der Kaltluftkanal-Klappe (20) andererseits als proportional abhängig voneinander angenommen wird.

**5.** Verfahren nach einem der vorhergehenden Ansprüche, **dadurch gekennzeichnet, dass** die Mischtemperatur $T_{Bel}$ einerseits und die Summe aus den beiden Produkten von Warmluftkanal-Temperatur ($T_{WT}$) und Warmluftkanal-Öffnungsgrad ($\alpha_{warm}$) sowie Kaltluftkanal-Temperatur ($T_{VD}$) und Kaltluftkanal-Öffnungsgrad ($\alpha_{kalt}$) andererseits als proportional abhängig voneinander angenommen wird.

## Claims

**1.** A method for the control of ventilation, in which an air mixture temperature $T_{Bel}$ and an air mass flow $m_{Bel}$ can be selected in a single mixed air channel by the adjustment of a real flap (22) arranged in a hot air channel (14) and a real flap (20) arranged in a cold air channel (12), wherein the hot and cold air channel merge downstream from the flaps to form the single channel, and in which the flap positions are adjusted on the basis of controlled variables, **characterised in that** a virtual flap (24) is defined in the single channel (10), in the implementation of which flap, by its adjustment, the air mass flow $m_{Bei}$ would be determined, **in that** control variables are used for the position of the virtual flap (24), which - on implementation of the virtual flap (24) - would produce a specific air mass flow $m_{Bei}$ and **in that** the positions of the cold air channel flap (20) and the hot air channel flap (22) are determined as a function of the control variables for the virtual flap by means of a conversion programme, in such a way that the air mass flow $M_{Bei}$ to be generated by the virtual flap (24) can be implemented by the adjustment of the real flaps (20, 22).

**2.** A method according to claim 1, **characterised in that** in the conversion of the flap position of the virtual flap (24) into the positions of the flaps of the hot and cold air channel, the air temperatures in the hot air channel $T_{WT}$ and in the cold air channel $T_{VD}$ are taken into account.

**3.** A method according to claim 1 or 2, **characterised in that** the desired mixture temperature $T_{Bei}$ is achieved by a corresponding adjustment of the cold air channel flap (20) and the hot air channel flap (22).

**4.** A method according to any one of claims 1 to 3, **characterised in that** the degree of opening of the virtual flap (24), on the one hand, and the sum of the degrees of opening of the hot air channel flap (22) and the cold air channel flap (20), on the other hand, are assumed to be proportionally dependent on one another.

**5.** A method according to any one of the preceding claims, **characterised in that** the mixture temperature $T_{Bei}$, on the one hand, and the sum of the two products of the hot air channel temperature ($T_{WT}$) and the hot air channel degree of opening ($\alpha_{hot}$), as well as the cold air channel temperature ($T_{VD}$) and the cold air channel opening degree ($\alpha_{cold}$), on the other hand, are assumed to be proportionally dependent on one another.

## Revendications

**1.** Procédé de régulation de la ventilation, permettant d'obtenir une température de mélange d'air $T_{Bel}$ ainsi qu'un débit massique d'air $m_{Bel}$ dans un canal global par le réglage d'un volet réel (22) dans un canal d'air chaud (14) et d'un volet réel (20) dans un canal d'air froid (12), les canaux d'air chaud et d'air froid se rejoignant en aval des volets vers le canal global, les positions des volets étant réglées en raison de grandeurs de commande, **caractérisé en ce qu'** on prévoit un volet virtuel (24) dont la réalisation définirait le débit massique d'air $m_{Bel}$ par son réglage, dans le canal global (10), on utilise des grandeurs de commande pour la position du volet virtuel (24) qui donneraient un débit massique d'air $m_{Bel}$ déterminé, avec la réalisation du volet virtuel (24), et on détermine les positions du volet du canal d'air froid (20) ainsi que du volet du canal d'air chaud (22) en fonction des grandeurs de commande pour le volet virtuel au moyen d'un programme de conversion tel sorte que le débit massique d'air $m_{Bel}$ à générer par le volet virtuel (24) est réalisé par le réglage des volet s réels (20, 22).

**2.** Procédé selon la revendication 1, **caractérisé en ce que** les températures d'air dans le canal d'air chaud $T_{WT}$

ainsi que dans le canal d'air froid $T_{VD}$ sont prises en compte lors de la conversion de la position du volet virtuel (24) en positions des volets du canal d'air chaud et d'air froid.

3. Procédé selon la revendication 1 ou 2,
**caractérisé en ce que**
la température de mélange $T_{Bel}$ souhaitée est atteinte par un réglage correspondant du volet du canal d'air froid (20) ainsi que du volet du canal d'air chaud (22).

4. Procédé selon l'une quelconque des revendications 1 à 3,
**caractérisé en ce que**
le degré d'ouverture du volet virtuel (24) d'une part et la somme des degrés d'ouverture du volet de l'arrivée d'air chaud (22) et du volet de l'arrivée d'air froid (20) d'autre part sont, supposés proportionnels l'un à l'autre.

5. Procédé selon l'une quelconque des revendications précédentes,
**caractérisé en ce que**
la température de mélange $T_{Bel}$ d'une part et la somme des deux produits de la température du canal d'air chaud ($T_{WT}$) et du degré d'ouverture du canal d'air chaud ($\alpha_{warm}$) ainsi que de la température du canal d'air froid ($T_{VD}$) et du degré d'ouverture du canal d'air froid ($\alpha_{kalt}$) d'autre part sont être supposées proportionnelles l'une à l'autre.

$m_{Bel}$
$T_{Bel}$

16    10

$-\alpha_{Bel}$

18    $\alpha_{mi}$

14    12

$m_{warm}$
$T_{WT}$

$m_{kalt}$
$T_{VD}$

Fig. 1

$m_{Bel}$
$T_{Bel}$

24    10

$-\alpha_{Bel, virt}$

22    12

14    $\alpha_{warm}$    20

$\alpha_{kalt}$

$m_{warm}$
$T_{WT}$

$m_{kalt}$
$T_{VD}$

Fig. 2

$$T_{Bel} \sim \frac{\alpha_{warm} \cdot T_{WT} + \alpha_{kalt} \cdot T_{VD}}{\alpha_{warm} + \alpha_{kalt}}$$

$$\alpha_{Bel\,virt} \sim \alpha_{warm} + \alpha_{kalt}$$

$$T_{Bel,\,neu} = T_{Bel,\,soll} + (T_{Bel,\,alt} - T_{Bel,\,ist})$$

Funktionsplan

Berechnung Sollwert $T_{Bel,\,soll}$

IHKA

Fig 3